# EUROPÄISCHE PATENTSCHRIFT

(11) **EP 1 109 450 B1**
(45) Veröffentlichungstag und Bekanntmachung des Hinweises auf die Patenterteilung: **19.02.2003**
(21) Anmeldenummer: 99946018.1
(22) Anmeldetag: 24.08.1999
(51) Int. Cl.: A01N 25/28

(54) **MIKROKAPSEL-FORMULIERUNGEN**
MICROCAPSULE FORMULATIONS
FORMULATIONS DE MICROCAPSULES

(30) Priorität: 05.09.1998 DE 19840582
(43) Veröffentlichungstag der Anmeldung: 27.06.2001
(73) Patentinhaber: Bayer CropScience AG, 40789 Monheim (DE)
(72) Erfinder: WOLF, Hilmar, D-40764 Langenfeld (DE); WEISSMÜLLER, Joachim, D-40789 Monheim (DE)
(86) Internationale Anmeldenummer: EP9906199
(87) Internationale Veröffentlichungsnummer: WO00013503

(56) Entgegenhaltungen:
- EP-A- 0 322 820
- EP-A- 0 841 088
- GB-A- 2 206 492

## Beschreibung

Die vorliegende Erfindung betrifft neue Mikrokapsel-Formulierungen von agrochemischen Wirkstoffen, ein Verfahren zu deren Herstellung und deren Verwendung zur Applikation von agrochemischen Wirkstoffen.

Es ist bereits bekannt, agrochemische Wirkstoffe in Form von emulgierbaren Konzentraten oder benetzbaren Pulvern mit Wasser zu verrühren und die dabei entstehende, anwendungsfertigen Spritzflüssigkeiten auf die Pflanzen zu sprühen. Nachteilig an diesem Verfahren ist, daß häufig ein hoher Aufwand betrieben werden muß, um einen ausreichenden Schutz für die Personen zu gewährleisten, die diese Spritzflüssigkeiten ausbringen.

Weiterhin wurde schon beschrieben, daß sich agrochemische Wirkstoffe in Form von wäßrigen Mikrokapsel-Suspensionen applizieren lassen (vgl. DE-A 3 016 189, DE-B 1 185 15, DE-B 1 248 016 und DE-A 2 734 577). Ungünstig ist jedoch, daß derartige Zubereitungen in vielen Fällen zur Agglomerisation neigen und die enthaltenen aktiven Komponenten nicht immer in der gewünschten Menge und über den angestrebten längeren Zeitraum freigesetzt werden.

Schließlich geht aus der WO 98-29 360 hervor, daß sich Pflanzennährstoffe mit Hilfe von Isocyanat-Gemischen und Polyolen mikroverkapseln lassen. Der Einsatz solcher Isocyanat-Gemische zur Mikroverkapselung von agrochemischen Wirkstoffen wurde aber bisher noch nicht offenbart.

Im Übrigen betrifft die EP-A 0 841 088 Mikrokapseln, deren Füllung ein Pflanzenschutzmittel sein kann. Die Hüllen dieser Mikrokapseln werden mit Hilfe von Imino-oxadiazin-dionen erzeugt. Es werden aber keine Mikrokapseln erwähnt, deren Hüllen durch Reaktion von Oxadiazin-trion-diisocyanat oder anderen cyclischen Isocyanaten gebildet werden, die keine Imino-Gruppen aufweisen.

Es wurden nun neue Mikrokapsel-Formulierungen gefunden, die aus
A) einer teilchenförmigen dispersen Phase aus
   a) einem Reaktionsprodukt von
      - mindestens einem Diamin, Polyamin, Dialkohol, Polyalkohol und/oder Aminoalkohol mit
      - mindestens einem Isocyanat aus der Gruppe von Verbindungen der Formeln 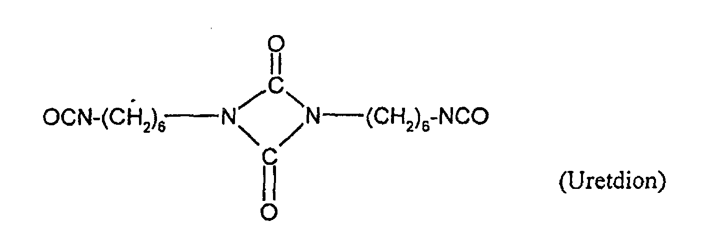 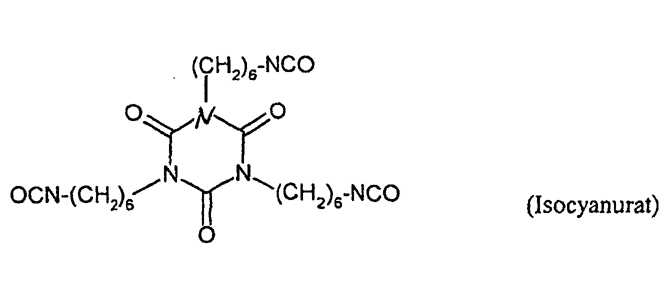 und 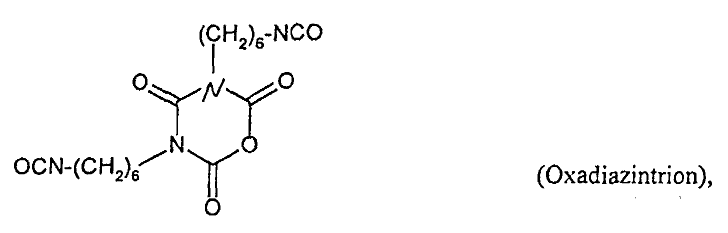
      wobei diese Isocyanate bei der Dimerisierung und/oder Trimerisierung von Hexamethylen-1,6-diisocyanat der Formel

      OCN-(CH₂)₆-NCO (I)

      und/oder bei der Umsetzung von Hexamethylen-1,6-diisocyanat der Formel (I) mit Wasser und/oder Kohlendioxid anfallen,
      gegebenenfalls im Gemisch mit Toluylendiisocyanat,
   b) mindestens einem fungiziden Wirkstoff aus der Gruppe der Amino-Derivate, der Morpholin-Derivate oder der Azol-Derivate oder
      mindestens einem insektiziden Wirkstoff aus der Gruppe der Phosphorsäureester, der Pyrethroide oder der Carbamate oder
      mindestens einem herbiziden Wirkstoff aus der Gruppe der Acetanilide sowie
   c) gegebenenfalls Zusatzstoffen besteht, wobei die Teilchen der dispersen Phase eine mittlere Partikelgröße zwischen 1 und 20 µm aufweisen und
B) einer flüssigen, wäßrigen Phase bestehen.

Weiterhin wurde gefunden, daß sich erfindungsgemäße Mikrokapsel-Formulierungen herstellen lassen, indem man
α) in einem ersten Schritt
   mindestens einen fungiziden Wirkstoff aus der Gruppe der Amino-Derivate, der Morpholin-Derivate oder der Azol-Derivate oder
   mindestens einen insektiziden Wirkstoff aus der Gruppe der Phosphorsäureester, der Pyrethroide oder der Carbamate oder
   mindestens einen herbiziden Wirkstoff aus der Gruppe der Acetanilide mit
   mindestens einem Isocyanat aus der Gruppe von Verbindungen der Formeln 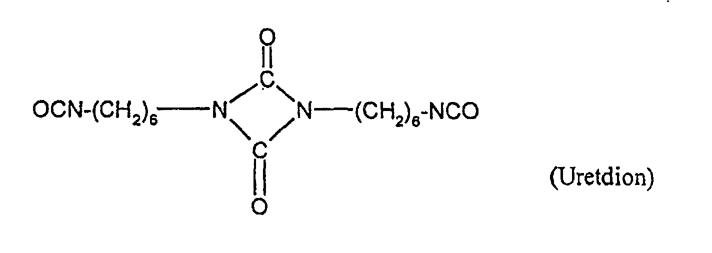 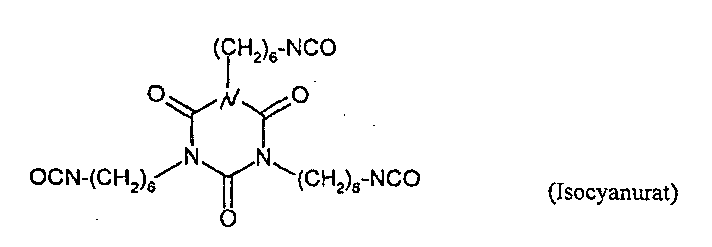 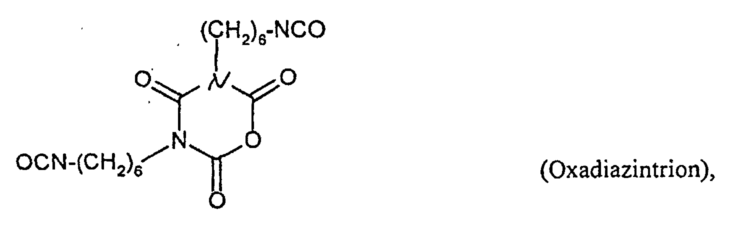 wobei diese Isocyanate bei der Dimerisierung und/oder Trimerisierung von Hexamethylen-1,6-diisocyanat der Formel

   OCN-(CH₂)₆-NCO (I)

   und/oder bei der Umsetzung von Hexamethylen-1,6-diisocyanat der Formel (I) mit Wasser und/oder Kohlendioxid anfallen,
   gegebenenfalls im Gemisch mit Toluylendiisocyanat,
   sowie gegebenenfalls mit einem organischen Lösungsmittel und gegebenenfalls einem Emulgator vermischt,
β) die so hergestellte Mischung dann in einem zweiten Schritt in Wasser, gegebenenfalls im Gemisch mit Zusatzstoffen, dispergiert und
γ) die so hergestellte Dispersion in einem dritten Schritt mit mindestens einem Diamin, Polyamin, Dialkohol, Polyalkohol und/oder Aminoalkohol, gegebenenfalls im Gemisch mit Wasser, versetzt und danach gegebenenfalls noch Zusatzstoffe hinzufügt. Schließlich wurde gefunden, daß die erfindungsgemäßen Mikrokapsel-Formulierungen sehr gut zur Applikation der enthaltenen agrochemischen Wirkstoffe auf Pflanzen und/oder deren Lebensraum geeignet sind.

Es ist als äußerst überraschend zu bezeichnen, daß die erfindungsgemäßen Mikrokapsel-Formulierungen besser zur Applikation der enthaltenen agrochemischen Wirkstoffe geeignet sind als die konstitutionell ähnlichsten, vorbekannten Zubereitungen.

Unerwartet ist vor allem, daß sich von den zahlreichen in Frage kommenden Isocyanaten gerade das oben erwähnte Isocyanat-Gemisch, bzw. Gemisch von Isocyanat-Reaktionsprodukten, besonders gut zur Herstellung von Mikrokapsel-Formulierungen mit den gewünschten Eigenschaften einsetzen läßt.

Die erfindungsgemäßen Mikrokapsel-Formulierungen zeichnen sich durch eine Reihe von Vorteilen aus. So sind sie in der Lage, die aktiven Komponenten über einen längeren Zeitraum in der jeweils erforderlichen Menge freizusetzen. Günstig ist auch, daß die Pflanzenverträglichkeit der enthaltenen Wirkstoffe verbessert wird und außerdem auch die akute Toxizität der aktiven Komponenten vermindert wird, so daß die Ausbringung der Mikrokapsel-Formulierungen für das Bedienungspersonal auch ohne große Sicherheitsvorkehrungen unproblematisch ist.

Die erfindungsgemäßen Mikrokapsel-Formulierungen sind durch die in der dispergierten und der flüssigen Phase enthaltenen Bestandteile charakterisiert.

Die unter (a) genannten Isocyanate fallen an bei der Dimerisierung und/oder Trimerisierung von Hexamethylen-1,6-diisocyanat und/oder bei der Umsetzung von 1 mol Hexamethylen-1,6-diisocyanat und/oder dessen Dimeren oder Trimeren mit 0,25 bis 0,5 mol Wasser und/oder 0,5 mol Kohlendioxid. Bei diesen Reaktionsprodukten handelt es sich demgemäß um Uretdione, Isocyanurate, Biurete und/oder Oxadiazintrione des Hexamethylen-1,6-diisocyanats der Formel (I).

Die unter (a) aufgeführten Isocyanate bzw. Reaktionsprodukte von Isocyanaten sind bekannt (vgl. WO 98-29 360). Gleiches gilt für das ebenfalls unter (a) erwähnte Toluylendiisocyanat.

Als Amine der unter (a) aufgeführten Gruppen kommen vorzugsweise aliphatische und alicyclische primäre und sekundäre Diamine und Polyamine in Betracht. Als Beispiele genannt seien
Ethylendiamin-(1,2), Diethylentriamin, Triethylentetramin, Bis-(3-aminopropyl)-amin, Bis-(2-methylaminoethyl)-methylamin, 1,4-Diamino-cyclohexan, 3-Amino-1-methyl-aminopropan, N-Methyl-bis-(3-aminopropyl)-amin, 1,4-Diamino-n-butan und 1,6-Diamino-n-hexan.

Diese Diamine und Polyamine sind bekannte Verbindungen der organischen Chemie.

Als Alkohole der unter (a) aufgeführten Gruppen kommen vorzugsweise primäre und sekundäre, aliphatische Dialkohole und Polyalkohole in Frage. Als Beispiele seien genannt:
Ethandiol, Propandiol-(1,2), Propandiol-(1,3), Butandiol-(1,4), Pentandiol-(1,5), Hexandiol-(1,6), Glycerin und Diethylenglykol.

Diese Dialkohole und Polyalkohole sind ebenfalls bekannt.

Als Beispiele für einen der unter (a) aufgeführten Aminoalkohole sei Triethanolamin genannt. Auch diese Aminoalkohole sind bekannt.

In den erfindungsgemäßen Mikrokapsel-Formulierungen können einer oder mehrere der unter (b) aufgeführten agrochemischen Wirkstoffe enthalten sein.

Bevorzugte fungizide Wirkstoffe sind dabei Amino-Derivate, wie 8-(1,1-Dimethylethyl)-N-ethyl-N-propyl-1,4-dioxaspiro[4,5]decan-2-methanamin (Spiroxamine) und Fenpropidin, und außerdem Morpholin-Derivate, wie Aldimorph, Dodemorph und Fenpropimorph.

Bevorzugte fungizide Wirkstoffe sind im vorliegenden Zusammenhang auch Triadimefon, Triadimenol, Bitertanol, Dichlobutrazol, Tebuconazol, Propiconazol, Difenoconazol, Cyproconazol, Flutriafol, Hexaconazol, Myclobutanil, Penconazol, Etaconazol, Bromuconazol, Epoxiconazol, Fenbuconazol, Tetraconazol, Diniconazol, Flusilazol, Prochloraz, Metconazol, Ipconazol, Fluquinconazol, Triticonazol, Triflumizol, Imibenconazol, Imazalil und 2-[2-(1-Chlor-cyclopropyl)-3-(2-chlorphenyl)-2-hydroxypropyl]-2,4-dihydro-[1,2,4]-triazol-3-thion.

Als insektizide Wirkstoffe der unter (b) aufgeführten Gruppen seien vorzugsweise genannt
Azinphos-methyl, Azinphos-ethyl, Bromophos A, Chlorpyriphos, Chlorpyriphos M, Dichlorphos, Edifenphos, Fenamiphos, Isofenphos, Malathion, Mesulfenphos, Parathion A, Parathion M, Pirimiphos, Profenofos, Pyraclophos, Tebupirimfos, Betacyfluthrin, Cyfluthrin, Cypermethrin, Transfluthrin und Lambda-cyhalothrin,
und ferner
Aldicarb, Aldoxycarb, Aminocarb, Bendiocarb, Bufencarb, Butacarb, Butocarboxim, Butoxycarboxim, 2-sek-Butyl-phenyl-methylcarbamat, Carbanolate, Carbaryl, Carbofuran, Cartap, Decarbofuran, Dimetilan, Dioxacarb, Ethiofencarb, Fenethacarb, Formetanate, Formparanate, Isoprocarb, Methiocarb, Methomyl, Mexacarbate, Nabam, Nitrilacarb, Oxamil, Pirimicarb, Promecarb, Propomer, Thiofanox, Thiocarboxim Thiram, Trimethylphenyl-methylcarbamat, 3,4-Xylyl-methylcarbamat und 3,5-Xylyl-methylcarbamat.

Als herbizide Wirkstoffe der unter (b) aufgeführten Acetanilide seien vorzugsweise genannt:
Alachlor, Acetochlor, Butachlor, Metazachlor, Metolachlor, Petrilachlor und Propachlor.

Als Zusatzstoffe, die in den erfindungsgemäßen Mikrokapsel-Formulierungen enthalten sein können, kommen organische Solventien, Emulgatoren, Schutzkolloide, Verdicker, Konservierungsmittel, Entschäumer, Kältestabilisatoren und Neutralisationsmittel in Frage.

Als organische Solventien kommen dabei alle üblichen organischen Lösungsmittel in Betracht, die einerseits mit Wasser wenig mischbar sind, andererseits aber die eingesetzten agrochemischen Wirkstoffe gut lösen. Vorzugsweise genannt seien aliphatische und aromatische, gegebenenfalls halogenierte Kohlenwasserstoffe, wie Toluol, Xylol, Solvesso®, Tetrachlormethan, Chloroform, Methylenchlorid und Dichlorethan, außerdem Ester, wie Ethylacetat, und Alkancarbonsäureamide, wie Octancarbonsäuredimethylamid und Decancarbonsäuredimethylamid.

Als Emulgatoren kommen übliche, in Formulierungen von agrochemischen Wirkstoffen vorhandene oberflächenaktive Substanzen in Frage. Beispielhaft genannt seien ethoxylierte Nonylphenole, Polyethylenglykolether von linearen Alkoholen, Umsetzungsprodukte von Alkylphenolen mit Ethylenoxid und/oder Propylenoxid, weiterhin Fettsäureester, Alkylsulfonate, Alkylsulfate und Arylsulfate.

Als Schutzkolloide (Dispergiermittel) kommen alle üblicherweise für diesen Zweck eingesetzten Substanzen in Betracht. Vorzugsweise genannt seien natürliche und synthetische wasserlösliche Polymere, wie Gelatine, Stärke und Cellulose-Derivate, insbesondere Celluloseester und Celluloseether, wie Methylcellulose, ferner Polyvinylalkohole, teilhydrolysierte Polyvinylacetate, Ligninsulfonate, Polyvinylpyrrolidone und Polyacrylamide.

Als Verdicker kommen alle üblicherweise für diesen Zweck in Pflanzenbehandlungsmitteln einsetzbaren Stoffe in Frage. Bevorzugt sind Kelzan® (thixotropes Verdickungsmittel auf Xanthan-Basis), Kieselsäuren und Attapulgit.

Als Konservierungsmittel kommen alle üblicherweise für diesen Zweck in Pflanzenbehandlungsmitteln vorhandenen Substanzen in Betracht. Als Beispiele genannt seien Preventol® und Proxel®.

Als Entschäumer kommen alle üblicherweise für diesen Zweck in Pflanzenbehandlungsmitteln einsetzbaren Stoffe in Frage. Vorzugsweise genannt seien Silan-Derivate, wie Polydimethyl-siloxane, und Magnesiumstearat.

Als Kältestabilisatoren können alle üblicherweise für diesen Zweck in Pflanzenbehandlungsmitteln einsetzbaren Stoffe fungieren. Beispielhaft genannt seien Harnstoff, Glycerin und Propylenglykol.

Als Neutralisationsmittel kommen übliche Säuren und Basen in Betracht. Beispielhaft genannt seien Phosphorsäure und wäßrige Ammoniak-Lösung.

Die Teilchen der dispersen Phase weisen eine mittlere Partikelgröße auf, die im allgemeinen zwischen 1 und 20 µm, vorzugsweise zwischen 3 und 15 µm liegt.

Die wäßrige Phase der erfindungsgemäßen Mikrokapsel-Formulierungen besteht im wesentlichen aus Wasser. Sie kann außerdem auch Zusatzstoffe, wie Emulgatoren, Schutzkolloide, Konservierungsmittel, Entschäumer, Kältestabilisatoren und Neutralisationsmittel enthalten.

Vorzugsweise kommen hierbei diejenigen Komponenten in Betracht, die für diese Substanzen bereits als bevorzugt genannt wurden. Darüber hinaus können in der wäßrigen Phase auch geringe Mengen organischer Solventien sowie an den übrigen Bestandteilen der dispersen Phase enthalten sein.

Die Zusammensetzung der erfindungsgemäßen Mikrokapsel-Formulierungen kann innerhalb eines bestimmten Bereiches variiert werden. Der Anteil der dispersen Phase in Bezug auf die gesamte Formulierung liegt im allgemeinen zwischen 30 und 70 Gew.-%, vorzugsweise zwischen 40 und 60 Gew.-%. Auch innerhalb der dispersen Phase kann der Anteil der einzelnen Bestandteile innerhalb eines bestimmten Bereiches variiert werden. So liegen in der dispersen Phase die Konzentrationen
- an Reaktionsprodukt aus Isocyanat- und Diamin, Polyamin, Dialkohol, Polyalkohol und/oder Aminoalkohol im allgemeinen zwischen 1 und 2 Gew.-%, vorzugsweise zwischen 2 und 10 Gew.-%,
- an agrochemischen Wirkstoffen im allgemeinen zwischen 10 und 90 Gew.-%, vorzugsweise zwischen 20 und 80 Gew.-% und
- an Zusatzstoffen im allgemeinen zwischen 0 und 90 Gew.-%, vorzugsweise zwischen 10 und 80 Gew.-%.

Die Herstellung der erfindungsgemäßen Mikrokapsel-Formulierungen erfolgt nach der Verfahrensweise der Mikroverkapselung.

Im allgemeinen geht man dabei so vor, daß man im ersten Schritt des Verfahrens (Stufe α) eine Lösung aus einem oder mehreren agrochemischen Wirkstoffen, Isocyanat sowie gegebenenfalls aus organischem Lösungsmittel und Emulgator herstellt. Handelt es sich bei dem agrochemischen Wirkstoff um eine Festsubstanz, so setzt man diesen im allgemeinen in Form einer Lösung in einem organischen Solvens ein. Ist der agrochemische Wirkstoff bei Raumtemperatur flüssig, so erübrigt sich die Verwendung eines organischen Lösungsmittels. Als agrochemische Wirkstoffe, organische Lösungsmittel und Emulgatoren kommen hierbei vorzugsweise diejenigen Substanzen in Frage, die bereits im Zusammenhang mit der Beschreibung der erfindungsgemäßen Mikrokapsel-Formulierungen als bevorzugt genannt wurden.

Die Mengen an den einzelnen Bestandteilen werden so gewählt, daß sie in der resultierenden dispersen Phase in den Konzentrationen vorliegen, die schon als bevorzugt genannt wurden. Dabei kann das Verhältnis von dem unter (a) genannten Isocyanat
. zu Toluylendiisocyanat in einem bestimmten Verhältnis variiert werden. Auf 1 Gew.-Teil an dem unter (a) genannten Isocyanat- setzt man im allgemeinen zwischen 0 und 10 Gew.-Teile, vorzugsweise zwischen 0 und 5 Gewichtsteile an Toluylendiisocyanat ein.

Die in der Stufe α des erfindungsgemäßen Verfahrens hergestellte Lösung wird im zweiten Schritt des Verfahrens (Stufe β) in Wasser, gegebenenfalls im Gemisch mit Zusatzstoffen dispergiert.

Als Zusatzstoffe kommen hierbei Schutzkolloide und Emulgatoren in Betracht. Vorzugsweise in Frage kommen diejenigen Substanzen, die bereits im Zusammenhang mit der Beschreibung der erfindungsgemäßen Mikrokapsel-Formulierungen als Schutzkolloide bzw. Emulgatoren bevorzugt genannt wurden.

Zur Herstellung der Dispersionen können alle für derartige Zwecke üblichen Apparate eingesetzt werden, die starke Scherkräfte erzeugen. Beispielhaft genannt seien Rotor-Stator-Mischer und Strahldispergatoren.

Die in der Stufe β des erfindungsgemäßen Verfahrens hergestellte Dispersion wird im dritten Schritt des Verfahrens (Stufe γ) unter Rühren zunächst mit mindestens einem Diamin, Polyamin, Dialkohol, Polyalkohol und/oder Aminoalkohol versetzt. Dabei werden die Amin- bzw. Alkohol-Komponenten zweckmäßigerweise in wäßriger Lösung zugefügt. Nach Beendigung der zur Kapselbildung führenden Reaktion wird gegebenenfalls noch mit Zusatzstoffen versetzt.

Als Reaktionskomponenten kommen hierbei vorzugsweise alle diejenigen Diamine, Polyamine, Dialkohole, Polyalkohole und Aminoalkohole in Betracht, die schon im Zusammenhang mit der Beschreibung der erfindungsgemäßen Mikrokapsel-Formulierungen als bevorzugt genannt wurden.

Als Zusatzstoffe kommen bei der Durchführung der Stufe γ des erfindungsgemäßen Verfahrens Verdicker, Konservierungsmittel, Entschäumer, Kältestabilisatoren und Neutralisationsmittel in Frage. Vorzugsweise verwendbar sind dabei diejenigen Substanzen, die bereits im Zusammenhang mit der Beschreibung der erfindungsgemäßen Mikrokapsel-Formulierungen als bevorzugte Verdicker, Konservierungsmittel, Entschäumer, Kältestabilisatoren und Neutralisationsmittel genannt wurden.

Bei der Durchführung des erfindungsgemäßen Verfahrens kann das Verhältnis von Isocyanat zu Amin- bzw. Alkohol-Komponenten in einem bestimmten Bereich variiert werden. Im allgemeinen setzt man auf 1 mol an Isocyanat 0,8 bis 1,5 Äquivalente an Amin- bzw. Alkohol-Komponente ein. Bevorzugt wählt man die Mengen an Isocyanat und Amin bzw. Alkohol so, daß äquimolare Mengen an IsocyanatGruppen und an Amino- bzw. Hydroxy-Gruppen vorhanden sind.

Die Reaktionstemperaturen können bei der Durchführung des erfindungsgemäßen Verfahrens innerhalb eines bestimmten Bereiches variiert werden. Man arbeitet bei der Durchführung
- der ersten Stufe im allgemeinen bei Temperaturen zwischen 0°C und 40°C, vorzugsweise zwischen 2°C und 30°C,
- der zweiten Stufe im allgemeinen bei Temperaturen zwischen -10°C und +40°C, vorzugsweise zwischen 0°C und 80°C und
- der dritten Stufe im allgemeinen bei Temperaturen zwischen 0°C und 80°C, vorzugsweise zwischen 10°C und 75°C.

Das erfindungsgemäße Verfahren wird im allgemeinen unter Atmosphärendruck durchgeführt.

Die erfindungsgemäßen Mikrokapsel-Formulierungen eignen sich hervorragend zur Applikation der enthaltenen agrochemischen Wirkstoffe auf Pflanzen und/oder deren Lebensraum. Sie gewährleisten die Freisetzung der aktiven Komponenten in der jeweils gewünschten Menge über einen längeren Zeitraum.

Die erfindungsgemäßen Mikrokapsel-Formulierungen können entweder als solche oder nach vorherigem Verdünnen mit Wasser in der Praxis eingesetzt werden. Die Anwendung erfolgt dabei nach üblichen Methoden, also z.B. durch Gießen, Verspritzen oder Versprühen.

Die Aufwandmenge an den erfindungsgemäßen Mikrokapsel-Formulierungen kann innerhalb eines größeren Bereiches variiert werden. Sie richtet sich nach den jeweiligen agrochemischen Wirkstoffen und nach deren Gehalt in den Mikrokapsel-Formulierungen.

Die Erfindung wird durch die folgenden Beispiele veranschaulicht.

### Herstellungsbeispiel

### Beispiel 1

Eine Lösung aus 30,36 g β-Cyfluthrin, 91,22 g Solvesso® 150, 0,12 g Tristyrylphenol-ethoxylat und 1,58 g Desmodur® N 3200 wird mit Hilfe eines Dispergators bei 10 000 Upm innerhalb von einer Minute in 145,12 g einer 1 gew.-%igen Lösung von Polyvinylalkohol (Mowiol 26-88®) in Wasser im Gemisch mit 0,06 g eines Silikon-Entschäumers dispergiert. Danach werden 0,86 g Triethanolamin zugegeben. Das dabei entstehende Reaktionsgemisch wird innerhalb von einer Stunde auf 70°C aufgeheizt und weitere 4 Stunden unter langsamen Rühren bei 70°C gehalten. Nach dem anschließenden Abkühlen auf Raumtemperatur werden 30,0 g einer 2 gew.-%igen Lösung von Kelzan S® (Verdicker auf Xanthan-Basis) in Wasser und 0,54 g Konservierungsmittel (Preventol® D7) hinzugefügt.. Man erhält auf diese Weise 300 g einer Mikrokapsel-Formulierung mit einem β-Cyfluthrin-Gehalt von 100 g/l und einer mittleren Partikelgröße von 4,3 µm.

### Beispiel 2

Eine Lösung aus 30,36 g β-Cyfluthrin, 91,22 g Solvesso® 150, 0,12 g Tristyrylphenol-ethoxylat und 3,17 g Desmodur® N 3200 wird bei 17°C mit Hilfe eines Dispergators bei 10 000 Upm innerhalb von einer Minute in145,12 g einer 1 gew.-%igen Lösung von Polyvinylalkohol (Mowiol 26-88®) in Wasser im Gemisch mit 0,06 g eines Silikon-Entschäumers dispergiert. Danach werden 0,62 g Monoethylenglykol zugegeben. Das dabei entstehende Reaktionsgemisch wird innerhalb von einer Stunde auf 70°C aufgeheizt und weitere 4 Stunden unter langsamen Rühren bei 70°C gehalten. Nach dem anschließenden Abkühlen auf Raumtemperatur werden 30,0 g einer 2 gew.-%igen Lösung von Kelzan S® (Verdicker auf Xanthan-Basis) in Wasser und 0,54 g Konservierungsmittel (Preventol® D7) hinzugefügt.. Man erhält auf diese Weise 300 g einer Mikrokapsel-Formulierung mit einem β-Cyfluthrin-Gehalt von 100 g/l und einer mittleren Partikelgröße von 4,3 µm.

### Beispiel 3

Eine Lösung von 75,8 g Fenamiphos, 44,1 g Solvesso® 200, 2,30 g Toluylendiisocyanat und 2,65 g Desmodur® N 3400 wird bei 19°C mit Hilfe eines Dispergators bei 5 500 Umdrehungen pro Minute innerhalb von einer Minute in 141,7 g einer 1 gew.-%igen Lösung von Polyvinylalkohol (Mowiol 26-88®) in Wasser im Gemisch mit 0,06 g eines Silicon-Entschäumers dispergiert. Danach werden 2,72 g einer 50 gew.-%igen Lösung von Diethylentriamin in Wasser zugegeben. Das dabei entstehende Reaktionsgemisch wird innerhalb von einer Stunde auf 70°C erhitzt und weitere 4 Stunden unter langsamem Rühren bei 70°C gehalten. Nach dem anschließenden Abkühlen auf Raumtemperatur werden. 30,0 g einer 2 gew.-%igen Lösung von Kelzan® S (Verdicker auf Xanthan-Basis) in Wasser und 0,6 g Konservierungsmittel (Preventol® D7) hinzugefügt. Man erhält auf diese Weise 300 g einer Mikrokapsel-Formulierung mit einem Fenamiphos-Gehalt von 240 g/l und einer mittleren Partikelgröße von 3,5 µm.

### Beispiel 4

Nach der im Beispiel 3 beschriebenen Methode wird eine Mikrokapsel-Formulierung hergestellt unter Verwendung der folgenden Substanzen.
- Lösung:: 75,8 g Fenamiphos
45,4 g Solvesso® 200
2,77 g Toluylendiisocyanat
2,16 g 2H-1,3,5-Oxadiazin-2,4,6-(3H,5H)-trion-3,5-bis-(6-isocyanato-hex-1-yl)
- Wasser-Phase:: 140,3 g l gew.-%ige Polyvinylalkohollösung in Wasser
0,06 g Silikon-Entschäumer
- Amin:: 2,92 g 50 gew.-%ige Diethylentriamin-Lösung
- Zusatzstoffe:: 30,0 g 2 gew.-%ige Kelzan® S-Lösung
(Verdicker auf Xanthan-Basis)
0,54 g Konservierungsmittel ((Preventol® D7)

Man erhält auf diese Weise 300 g einer Mikrokapsel-Formulierung mit einem Fenamiphos-Gehalt von 240 g/l und einer mittleren Partikelgröße von 5,3 µm.

### Beispiel 5

Eine Mischung aus 158,9 g Tebupirimfos, 3,03 g Toluylendiisocyanat und 3,5 g 2H-1,3,5-Oxadiazin-2,4,6-(3H, 5H)-trion-3,5-bis-(6-isocyanato-hex-1-yl) wird bei 14°C mit Hilfe eines Dispergators bei 8000 Upm innerhalb von 30 Sekunden in 280,9 g einer 1 gew.-%igen Lösung von Polyvinylalkohol (Mowiol 26-88®) in Wasser im Gemisch mit 0,1 g eines Silikon-Entschäumers dispergiert. Danach werden 3,6 g einer 50 gew.-%igen Lösung von Diethylen-triamin in Wasser zugegeben. Das dabei entstehende Reaktionsgemisch wird innerhalb von 2 Stunden auf 70°C aufgeheizt und dann unter langsamen Rühren weitere 4 Stunden auf 70°C gehalten. Nach dem anschließenden Abkühlen auf Raumtemperatur werden 500 g einer 2 gew.-%igen Lösung von Kelzan® S (Verdicker auf Xanthan-Basis) in Wasser hinzugefügt. Man erhält auf diese Weise 500 g einer Mikrokapsel-Formulierung mit einem Tebupirimfos-Gehalt von 300 g/l und einer mittleren Partikelgröße von 4,7 µm.

### Beispiel 6

Eine Lösung von 171 g Tebupirimfos, 9 g Solvesso® 200und 17,3 g Desmodur® N 3300 wird bei 18°C mit Hilfe eines Dispergators bei 6 000 Upm innerhalb von 1 Minute in 251 g einer 1 gew.-%igen Lösung von Polyvinylalkohol (Mowiol 26-88®) in Wasser dispergiert. Danach werden 26,7g einer 10 gew.-%igen Lösung von Ethylendiamin in Wasser zugegeben. Das dabei entstehende Reaktionsgemisch wird innerhalb von 2 Stunden auf 55°C aufgeheizt und unter langsamem Rühren weitere 4 Stunden auf 55°C gehalten. Nach dem anschließenden Abkühlen auf Raumtemperatur werden 25,0 g einer 2 gew.-%igen Lösung von Kelzan® S (Verdicker auf Xanthan-Basis) in Wasser hinzugefügt. Man erhält auf diese Weise 500 g einer Mikrokapsel-Formulierung mit einem Tebupirimfos-Gehalt von 320 g/l und einer mittleren Partikelgröße von 5,1 µm.

### Verwendungsbeispiel

Zum Überprüfen der Wirkstoff-Freisetzung werden jeweils 3 g einer Mikrokapsel-Formulierung in 1 Liter Wasser suspendiert und 48 Stunden bei Raumtemperatur gerührt. Danach werden jeweils 5 ml entnommen und zur Abtrennung der Mikrokapseln zentrifugiert. In der verbleibenden wäßrigen Phase wird nach der HPLC-Methode der Gehalt an Wirkstoff bestimmt.

Die Ergebnisse gehen aus der nachstehenden Tabelle hervor.

**Tabelle 1**

| Beispiel Nr. | Gehalt an Wirkstoff |
|---|---|
| 3 | 87 ppm |
| 4 | 56 ppm |

## Patentansprüche

1. Mikrokapsel-Formulierungen, bestehend aus
A) einer teilchenförmigen dispersen Phase aus
a) einem Reaktionsprodukt von
- mindestens einem Diamin, Polyamin, Dialkohol, Polyalkohol und/oder Aminoalkohol mit
- mindestens einem Isocyanat aus der Gruppe von Verbindungen der Formeln 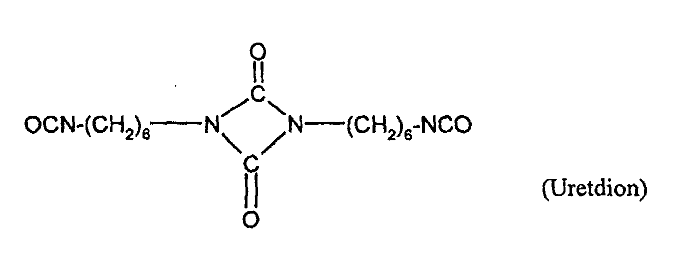 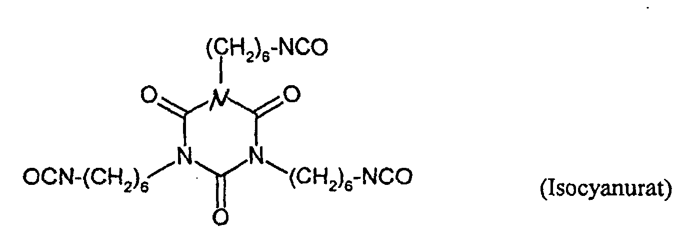 und 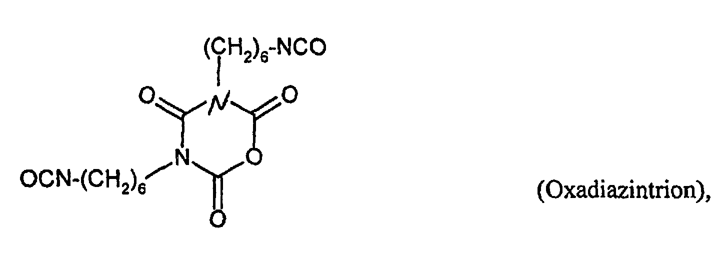
wobei diese Isocyanate bei der Dimerisierung und/oder Trimerisierung von Hexamethylen-1,6-diisocyanat der Formel
OCN-(CH₂)₆-NCO (I)
und/oder bei der Umsetzung von Hexamethylen-1,6-diisocyanat der Formel (I) mit Wasser und/oder Kohlendioxid anfallen,
gegebenenfalls im Gemisch mit Toluylendiisocyanat,
b) mindestens einem fungiziden Wirkstoff aus der Gruppe der Amino-Derivate, der Morpholin-Derivate oder der Azol-Derivate oder
mindestens einem insektiziden Wirkstoff aus der Gruppe der Phosphorsäureester, der Pyrethroide oder der Carbamate oder
mindestens einem herbiziden Wirkstoff aus der Gruppe der Acetanilide sowie
c) gegebenenfalls Zusatzstoffen besteht, wobei die Teilchen der dispersen Phase eine mittlere Partikelgröße zwischen 1 und 20 µm aufweisen und
B) einer flüssigen, wässrigen Phase.

2. Mikrokapsel-Formulierungen gemäß Anspruch 1, **dadurch gekennzeichnet, dass** als fungizider Wirkstoff Spiroxamine enthalten ist.

3. Mikrokapsel-Formulierungen gemäß Anspruch 1, **dadurch gekennzeichnet, dass** als fungizider Wirkstoff Fenpropidin enthalten ist.

4. Mikrokapsel-Formulierungen gemäß Anspruch 1, **dadurch gekennzeichnet**, dadd als insektizider Wirkstoff Fenamiphos enthalten ist.

5. Mikrokapsel-Formulierungen gemäß Anspruch 1, **dadurch gekennzeichnet, dass** als insektizider Wirkstoff Tebupirimfos enthalten ist.

6. Mikrokapsel-Formulierungen gemäß Anspruch 1, **dadurch gekennzeichnet, dass** als insektizider Wirkstoff Cyfluthrin enthalten ist.

7. Mikrokapsel-Formulierungen gemäß Anspruch 1, **dadurch gekennzeichnet, dass** als insektizider Wirkstoff Betacyfluthrin enthalten ist.

8. Verfahren zur Herstellung von Mikrokapsel-Formulierungen gemäß Anspruch 1, **dadurch gekennzeichnet, dass** man
α) in einem ersten Schritt
mindestens einen fungiziden Wirkstoff aus der Gruppe der Amino-Derivate, der Morpholin-Derivate oder der Azol-Derivate oder
mindestens einen insektiziden Wirkstoff aus der Gruppe der Phosphorsäureester, der Pyrethroide oder der Carbamate oder
mindestens einen herbiziden Wirkstoff aus der Gruppe der Acetanilide mit
mindestens einem Isocyanat aus der Gruppe von Verbindungen der Formeln 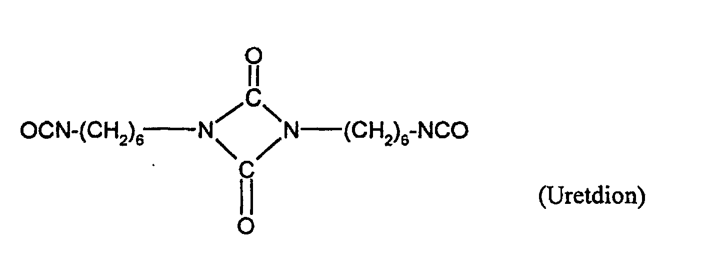 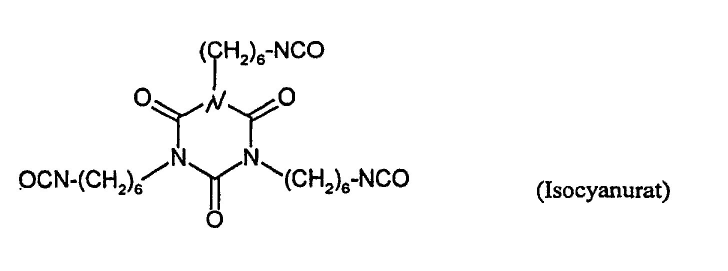 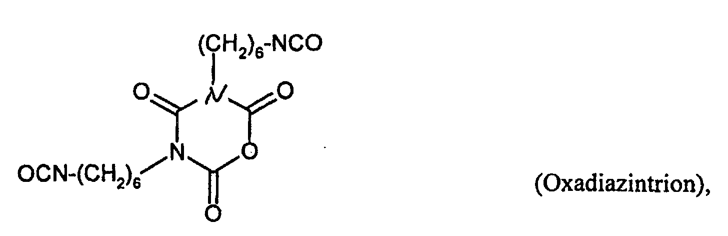 wobei diese Isocyanate bei der Dimerisierung und/oder Trimerisierung von Hexamethylen-1,6-diisocyanat der Formel
OCN-(CH₂)₆-NCO (I)
und/oder bei der Umsetzung von Hexamethylen-1,6-diisocyanat der Formel (I) mit Wasser und/oder Kohlendioxid anfallen,
gegebenenfalls im Gemisch mit Toluylendiisocyanat,
sowie gegebenenfalls mit einem organischen Lösungsmittel und gegebenenfalls einem Emulgator vermischt,
β) die so hergestellte Mischung dann in einem zweiten Schritt in Wasser, gegebenenfalls im Gemisch mit Zusatzstoffen, dispergiert und
y) die so hergestellte Dispersion in einem dritten Schritt mit mindestens einem Diamin, Polyamin, Dialkohol, Polyalkohol und/oder Aminoalkohol, gegebenenfalls im Gemisch mit Wasser, versetzt und danach gegebenenfalls noch Zusatzstoffe hinzufügt.

9. Verwendung von Mikrokapsel-Formulierungen gemäß Anspruch 1 zur Applikation der enthaltenen agrochemischen Wirkstoffe auf Pflanzen und/oder deren Lebensraum.

## Claims

1. Microcapsule formulations composed of
A) a particulate disperse phase of
a) a reaction product of
- at least one diamine, polyamine, dialcohol, polyalcohol and/or aminoalcohol with
- at least one isocyanate from the group of compounds of the formulae 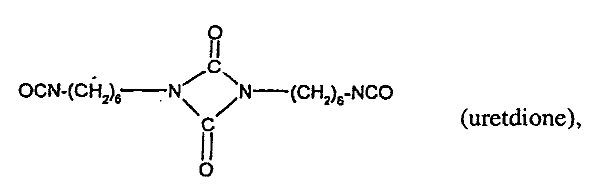 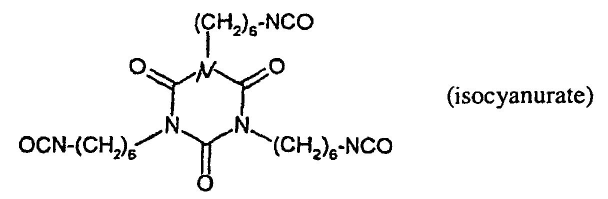 and 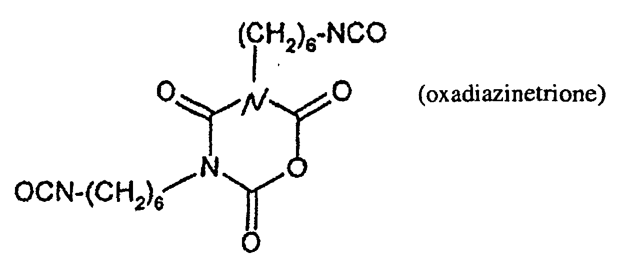 these isocyanates being obtained during the dimerization and/or trimerization of hexamethylene-1,6-diisocyanate, of the formula
OCN-(CH₂)₆-NCO (I)
and/or during the reaction of hexamethylene-1,6-diisocyanate, of the formula (I), with water and/or carbon dioxide,
if appropriate in a mixture with toluylene diisocyanate,
b) at least one fungicidally active compound from the group of the amino derivatives, the morpholine derivatives or the azole derivatives or
at least one insecticidally active compound from the group of the phosphoric esters, the pyrethroids or the carbamates or
at least one herbicidal active compound from the group of the acetanilides and
c) if appropriate, additives, the particles of the disperse phase having a mean particle size of between 1 and 20 µm and
B) a liquid aqueous phase.

2. Microcapsule formulations according to Claim 1, **characterized in that** the fungicidally active compound which it comprises is spiroxamine.

3. Microcapsule formulations according to Claim 1, **characterized in that** the fungicidally active compound which it comprises is fenpropidin.

4. Microcapsule formulations according to Claim 1, **characterized in that** the insecticidally active compound which it comprises is fenamiphos.

5. Microcapsule formulations according to Claim 1, **characterized in that** the insecticidally active compound which it comprises is tebupirimfos.

6. Microcapsule formulations according to Claim 1, **characterized in that** the insecticidally active compound which it comprises is cyfluthrin.

7. Microcapsule formulations according to Claim 1, **characterized in that** the insecticidally active compound which it comprises is beta-cyfluthrin.

8. Process for the preparation of microcapsule formulations according to Claim 1, **characterized in that**
α) in a first step,
at least one fungicidally active compound from the group of the amino derivatives, the morpholine derivatives or the azole derivatives or
at least one insecticidally active compound from the group of the phosphoric esters, the pyrethroids or the carbamates or
at least one herbicidally active compound from the group of the acetanilides
is mixed with at least one isocyanate from the group of compounds of the formulae 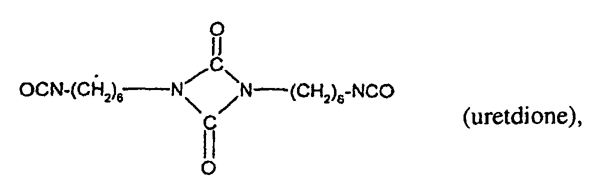 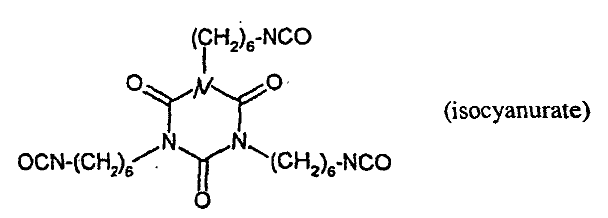 and 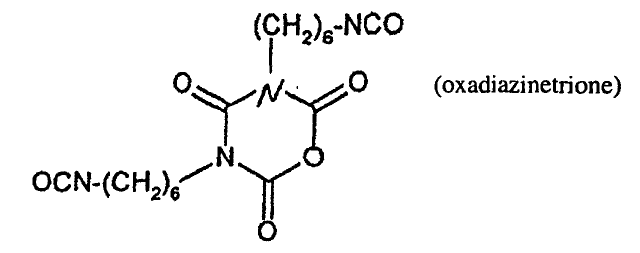 these isocyanates being obtained during the dimerization and/or trimerization of hexamethylene-1,6-diisocyanate, of the formula
OCN-(CH₂)₆-NCO (I),
and/or during the reaction of hexamethylene-1,6-diisocyanate, of the formula (I), with water and/or carbon dioxide,
if appropriate in a mixture with toluylene diisocyanate
and, if appropriate, with an organic solvent and, if appropriate, an emulsifier,
β) then, in a second step, dispersing the resulting mixture in water, if appropriate as a mixture with additives, and
γ) in a third step, adding at least one diamine, polyamine, dialcohol, polyalcohol and/or aminoalcohol, if appropriate as a mixture with water, and then, if appropriate, adding further additives to the resulting dispersion.

9. Use of microcapsule formulations according to Claim 1 for applying the agrochemically active compounds which they comprise to plants and/or their environment.

## Revendications

1. Formulations de microcapsules, consistant en :
A) une phase dispersée particulaire consistant en
a) un produit de réaction de :
- au moins une diamine, polyamine, dialcool, polyolacool et/ou aminoalcool avec
- au moins un isocyanate du groupe des composés des formules : 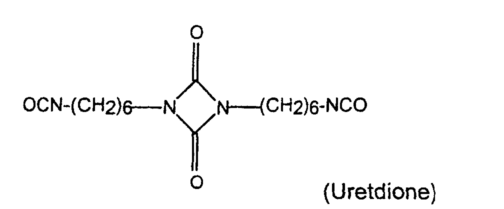 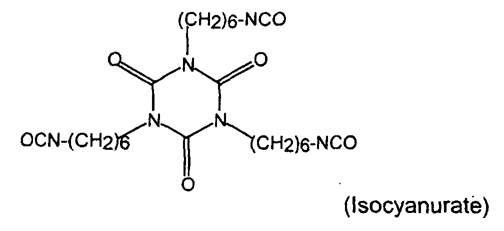 et 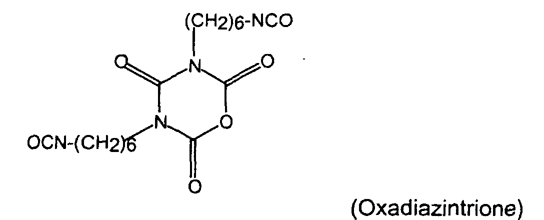
où ces isocyanates se forment par la dimérisation et/ou trimérisation de l'hexaméthylène-1,6-diisocyanate de la formule :
OCN-(CH₂)₆-NCO (I)
et/ou par réaction de l'hexaméthylène-1,6-diisocyanate de la formule (I) avec de l'eau et/ou du dioxyde de carbone,
le cas échéant en mélange avec du toluylènediisocyanate,
b) au moins un agent actif fongicide parmi le groupe des dérivés amino, des dérivés de la morpholine ou des dérivés azole, ou
au moins un agent actif insecticide parmi le groupe des esters d'acide phosphorique, des pyréthroïdes ou des carbamates, ou
au moins un agent actif herbicide parmi le groupe des acétanilides, ainsi que
c) le cas échéant, des additifs, où les particules de la phase dispersée présentent une taille moyenne des particules allant de 1 à 20 µm, et
B) une phase aqueuse liquide.

2. Formulations de microcapsules suivant la revendication 1, **caractérisées en ce que** la spiroxamine est présente comme agent actif fongicide.

3. Formulations de microcapsules suivant la revendication 1, **caractérisées en ce que** la fenpropidine est présente comme agent actif fongicide.

4. Formulations de microcapsules suivant la revendication 1, **caractérisées en ce que** le fenamiphos est présent comme agent actif insecticide.

5. Formulations de microcapsules suivant la revendication 1, **caractérisées en ce que** le tebupirimphos est présent comme agent actif insecticide.

6. Formulations de microcapsules suivant la revendication 1, **caractérisées en ce que** la cyfluthrine est présente comme agent actif insecticide.

7. Formulations de microcapsules suivant la revendication 1, **caractérisées en ce que** la bêta-cyfluthrine est présente comme agent actif insecticide.

8. Procédé de préparation de formulations de microcapsules suivant la revendication 1, **caractérisé en ce que** :
α) dans une première étape, on mélange
au moins un agent actif fongicide parmi le groupe des dérivés amino, des dérivés de la morpholine ou des dérivés azole, ou
au moins un agent actif insecticide parmi le groupe des esters d'acide phosphorique, des pyréthroïdes ou des carbamates, ou
au moins un agent actif herbicide parmi le groupe des acétanilides, avec
au moins un isocyanate parmi le groupe des composés de formules : 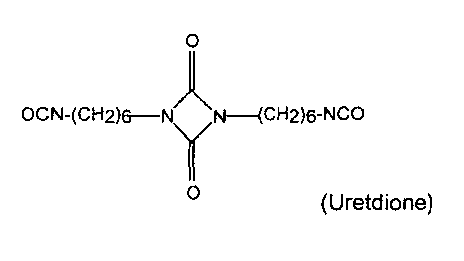 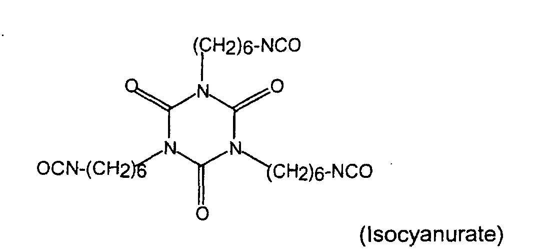 et 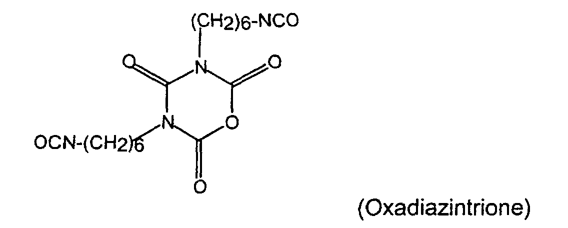 où ces isocyanates se forment par la dimérisation et/ou trimérisation de l'hexaméthylène-1,6-diisocyanate de la formule :
OCN-(CH₂)₆-NCO (I)
et/ou par réaction de l'hexaméthylène-1,6-diisocyanate de la formule (I) avec de l'eau et/ou du dioxyde de carbone,
le cas échéant en mélange avec du toluylènediisocyanate,
ainsi que le cas échéant, avec un solvant organique et le cas échéant, un émulsionnant,
β) on disperse dans une deuxième étape, le mélange ainsi préparé, dans de l'eau, le cas échéant en mélange avec des additifs, et
γ) la dispersion ainsi dispersée est ajoutée dans une troisième étape, à au moins une diamine, polyamine, dialcool, polyalcool et/ou aminoalcool, le cas échéant en mélange avec de l'eau et ensuite, on ajoute le cas échéant, encore des additifs.

9. Utilisation de formulations de microcapsules suivant la revendication 1, pour l'application de l'agent actif agrochimique présent sur des végétaux et/ou leur biotope.
